# NEUE EUROPÄISCHE PATENTSCHRIFT

(11) **EP 1 123 821 B2**
(45) Veröffentlichungstag und Bekanntmachung des Hinweises auf die Entscheidung über den Einspruch: **13.01.2016**
(45) Hinweis auf die Patenterteilung: 03.04.2013
(21) Anmeldenummer: 01100783.8
(22) Anmeldetag: 13.01.2001
(51) Int. Cl.: B60G 3/20, B60G 7/00

(54) **Radaufhängung eines Kraftfahrzeug-Hinterrades mit fünf Lenkern**
Suspension of a vehicle rear wheel with five links
Suspension à cinq bras pour une roue arrière de véhicule

(30) Priorität: 08.02.2000 DE 10005472
(43) Veröffentlichungstag der Anmeldung: 16.08.2001
(73) Patentinhaber: Bayerische Motoren Werke Aktiengesellschaft, 80809 München (DE)
(72) Erfinder: Seethaler, Ludwig, 80809 München (DE)

(56) Entgegenhaltungen:
- DE-A1- 2 220 034
- DE-A1- 3 048 864
- DE-A1- 4 408 571
- JP-A- 7 186 649
- JP-A- H0 585 115
- US-A- 4 705 292
- US-A- 5 415 427
- US-A- 5 507 510
- Allgemeine Informationen zur Mercedes-Benz E-Klasse T-Modell (Typ S210), abgerufen am 29.10.2013 von der offiziellen Internetpràsenz von Mercedes-Benz Deutschland
- (http://www.mercedes-benz.de/content/german y/mpc/mpc_germany_webseite/de
- /home_mpc/passengercars/home/_used_cars/tec hnical_data/estates/e-class_s210.html)

## Beschreibung

Die Erfindung betrifft eine Radaufhängung eines Kraftfahrzeug-Hinterrades nach dem Oberbegriff des einzigen Patentanspruchs. Eine solche Radaufhängung ist aus der DE 44 08 571 A1 bekannt.

Bekannte Fünf-Lenker-Hinterachsen weisen üblicherweise je Lenker ein oder zwei Gummilager oder allgemein elastische Lager auf, die vor allem die Aufgabe haben, die räumliche Bewegung der Lenker beim Ein- und Ausfedern des selbstverständlich in Vertikalrichtung gegenüber der Fahrzeug-Karosserie zusätzlich federnd gelagerten Radträgers zu ermöglichen. Dabei ergibt sich die Größe und Steifigkeit der Gummilager hauptsächlich aus den auftretenden Torsions- und Kardanwinkeln sowie aus der elastokinematischen Abstimmung mit dem Ziel bestimmter Vorspureffekte unter Längs- und Seitenkräften.

Grundsätzlich versucht man, nennenswerte Längsfederwege (bspw. in der Größenordnung mehrerer Millimeter) in den Lenker-Gummilagern mit Rücksicht auf das sog. Aufziehverhalten beim Bremsen zu vermeiden. Beim sog. Aufziehen unter Bremskraft verdreht sich die Radaufhängung um die Radachse, womit die elastokinematische Lenkdrehachse nach hinten schwenkt und unerwünschte Lenkeffekte unter Seitenkraft die Folge sein können. Außerdem kann diese Aufziehbewegung die Stempelneigung beim Bremsen erhöhen, womit ein Stick-Slip-Effekt gemeint ist, bei dem die Elastizitäten der Radaufhängung unter kurzzeitigem Verlust der Bodenhaftung periodisch verspannt und entspannt werden.

Eine ausreichende Entkopplung von Fahrbahnanregungen (hervorgerufen durch Unebenheiten, Stöße, etc.) ist praktisch nur durch möglichst große Gummivolumina in den elastischen Gummilagern mit relativ niedrigen Steifigkeiten und nennenswerten Federwegen möglich. Wenn die Lenker-Gummilager aus o.g. Gründen relativ hart und kleinvolumig ausgeführt werden, dann wird zumeist für die Erzielung eines ausreichenden Fahrkomforts ein sog. Hinterachsträger mit elastischer Lagerung vorgesehen werden, dessen Gummilager dann die Längsfederung zur Verfügung stellen. Dieselben Gummilager müssen aber auch die Vertikalkräfte aus der Abstützung des Antriebsmoments übernehmen und werden zudem mit den Rad-Seitenkräften beaufschlagt. Wegen der unterschiedlichen Lastfälle und Anforderungen sind hierbei oftmals aufwendige sog. Hydrolager vorgesehen. Zudem hat die Längsfederung durch die Hinterachsträger-Lager den Nachteil, daß bei links und rechts unterschiedlichen Längskräften Lenkwinkel auftreten, die das Fahrverhalten negativ beeinflussen können.

Bei der Radaufhängung nach der eingangs genannten DE 44 08 571 A1 ist kein derartiger Hinterachsträger vorgesehen. Vielmehr wird dort durch eine ausgeklügelte Lenker-Anordnung versucht, ein komfortables und unter allen Betriebsbedingungen sicheres Fahrverhalten zu erzielen. Bei diesem bekannten Stand der Technik ist jedoch für den dort sog. vorderen Längslenker, der im übrigen günstiger als hinterer Längslenker bezeichnet werden würde, da er sich ausgehend vom Radträger entgegen der Fahrzeug-Fahrtrichtung nach hinten erstreckt, ein Gummilager vorgesehen, welches aus Fahrkomfortgründen nur und alleine in Kompressionsrichtung ein elastisches Verhalten zeigt. Hingegen soll der Elastizitätsmodul dieses Gummilagers in Zugrichtung dieses Lenkers möglichst hoch sein, d.h. die diesbezügliche Lenker-Anbindung soll möglichst steif sein. Wie im vorletzten Absatz bereits erläutert wurde, kann mit einer derartigen Gestaltung selbst dann, wenn auf diesen Lenker eine Zugbelastung ausgeübt wird, nämlich hervorgerufen durch die Ausübung eines Moments auf den Radträger während des Bremsens, ein Verdrehen des Radträgers, d.h. ein sog. Aufziehen desselben, wegen der relativ hohen Steifigkeit des Lagers (bzw. der dort sog. elastischen Buchse) verhindert werden.

Grundsätzlich zeigt somit dieser bekannte Stand der Technik nach der DE 44 08 571 A1 vorteilhafte Eigenschaften, ist jedoch wegen des speziellen sozusagen halb-elastischen Lagers, das in Kompressionsrichtung des dort sog. vorderen Längslenkers, der im Rahmen der vorliegenden Erfindung und um Mißverständnisse zu vermeiden, im weiteren als sich zumindest teilweise in Längsrichtung erstreckender Querlenker bezeichnet wird, elastisch sein soll, in Zugrichtung dieses Lenkers hingegen möglichst starr sein soll, relativ aufwendig.

Eine demgegenüber verbesserte Radaufhängung nach dem Oberbegriff des unabhängigen Patentanspruchs aufzuzeigen, ist Aufgabe der vorliegenden Erfindung.
Die Lösung dieser Aufgabe ergibt sich mit den kennzeichnenden Merkmalen dieses Anspruchs.

Mit der vorliegenden Erfindung wird eine räumliche 5-Lenker-Hinterachse vorgeschlagen, die im Unterschied zum bekannten Stand der Technik mindestens ein großvolumiges, sowohl bei Zugbelastung, als auch bei Kompressionsbelastung relativ weiches Lenker-Gummilager (oder ein ähnliches elastisches Lager) aufweist, das somit geeignet ist, komfortrelevanten Längsfederweg zur Verfügung zu stellen, und das darüber hinaus in seinem Aufbau wesentlich einfacher ist als das im bekannten Stand der Technik nach der DE 44 08 571 A1 erforderliche sog. halb-elastische Lager. Dabei wird über die angegebene Anordnung und Abstimmung der Lenker (und ihrer Gummilager) eine unerwünschte Aufziehbewegung verhindert bzw. minimiert und das Vorspurverhalten der Achse unter äußeren Kräften gezielt im gewünschten Sinne beeinflußt. Dabei kann insbesondere das ausdrücklich genannte Querlenker-Gummilager auch in Querrichtung elastisch sein.

Analog dem zitierten bekannten Stand der Technik sind zwei der fünf Stablenker nennenswert in Längsrichtung angestellt, d.h. in einer Aufsicht senkrecht zum Untergrund mißt der Winkel zwischen der Fahrzeug-Längsachse und diesen Lenkern 45° oder weniger, wobei selbstverständlich auch mit einem Winkel in der Größenordnung von 50° im wesentlichen die gleichen Effekte erzielt werden können. Wesentlich ist, daß diese beiden Lenker, die hier und im folgenden als Längslenker und Querlenker bezeichnet werden, erhebliche Komponenten der angreifenden Längskräfte übernehmen bzw. abstützen.

In Hinblick auf die gewünschte Kinematik, insbesondere Elastokinematik auch im besagten elastischen Querlenker-Gummilager ist der in Fahrtrichtung betrachtet vordere und dabei unterhalb des Radmittelpunktes am Radträger befestigte sog. Längslenker mit seinem radträgerseitigen Gelenk dem Radaufstandspunkt am nächsten und erfährt deshalb beim Bremsen die größte Kraftänderung. Der in Fahrtrichtung betrachtet hintere und dabei oberhalb des Radmittelpunktes am Radträger befestigte sog. Querlenker dagegen übernimmt den wesentlichen Anteil einer Stoßkraft in Längsrichtung, da erfindungsgemäß (und abweichend vom bekannten Stand der Technik) sein radträgerseitiges Gelenk dem Radmittelpunkt am nächsten ist.

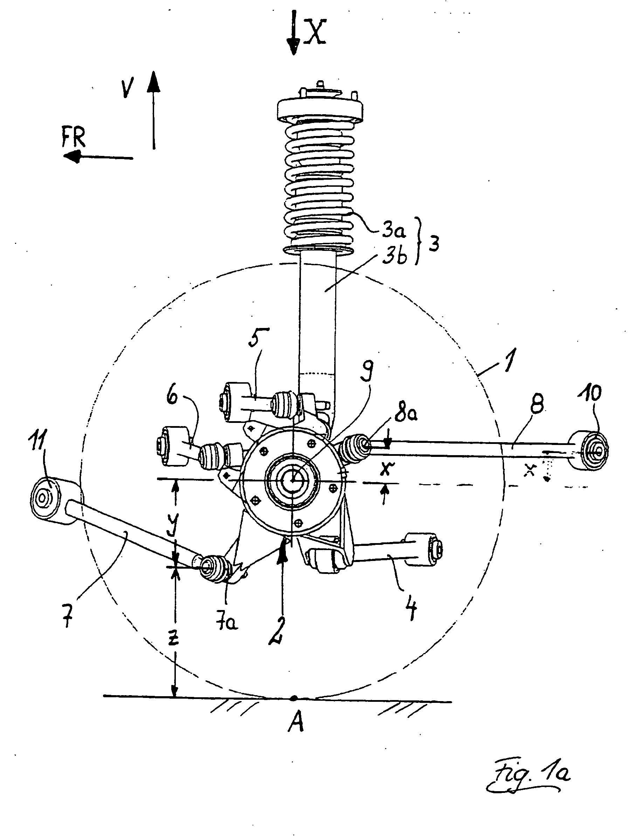

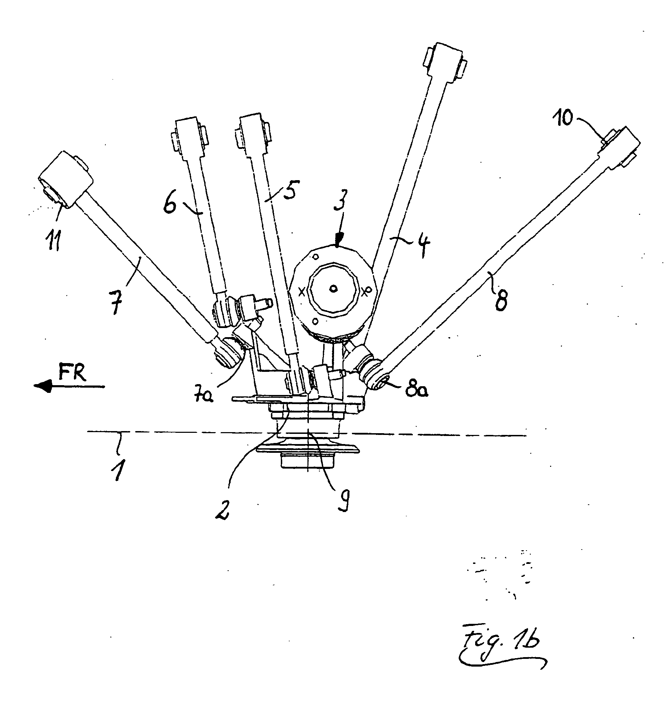

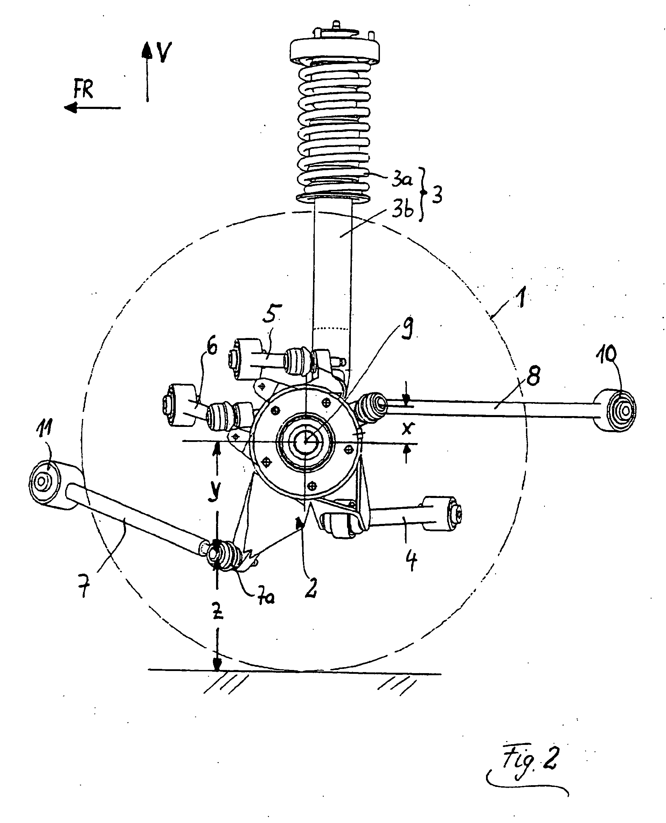

Im folgenden wird die Erfindung anhand zweier lediglich stark abstrahiert dargestellter bevorzugter Ausführungsbeispiele weiter erläutert, wobei die beigefügte **Figur 1a** die Seitenansicht und **Figur 1b** die entsprechende Aufsicht (Ansicht X aus Fig.la) einer ersten Ausführungsform zeigt, während in **Figur 2** die Seitenansicht eines geringfügig abgewandelten Ausführungsbeispieles dargestellt ist.

Mit der Bezugsziffer 1 ist der lediglich abstrakt dargestellte Radreifen und mit der Bezugsziffer 2 der Radträger eines linken Hinterrades eines Personenkraftwagens bezeichnet. Die zur Fahrzeuglängsachse parallele Fahrtrichtung FR des PKWs geht somit gemäß dem Pfeil FR von rechts nach links. Nicht dargestellt ist die PKW-Karosserie bzw. der Fahrzeug-Aufbau, der sich über eine Feder-Dämpfer-Einheit 3 (bestehend aus einer Feder 3a und einem parallel hierzu angeordnetem Dämpfer 3b) letztlich am Radreifen 1 (sowie auf drei weiteren Rädern) abstützt.

Über insgesamt fünf Lenker 4 bis 8 ist der Radträger 2 an der Fahrzeug-Karosserie gelenkig aufgehängt. Zusammen mit einem sog. Sturzlenker 4 stützt sich zusätzlich die Feder-Dämpfer-Einheit 3 ab. Dieser Sturzlenker 4 erstreckt sich ebenso wie ein sog. Führungslenker 5 sowie eine sog. Spurstange 6 im wesentlichen in Fahrzeug-Querrichtung, d.h. in der Darstellung nach **Fig. 1b** im wesentlichen senkrecht zur Fahrtrichtung FR.

Ebenso wie diese soweit aufgezählten Lenker 4 bis 6 ist auch ein sog. Längslenker 7 sowie ein sog. Querlenker 8 gelenkig einerseits am Radträger 2 und andererseits an der Fzg.-Karosserie befestigt. Dabei ist der zumindest teilweise in Fahrzeug-Längsrichtung (diese wird aufgrund ihrer Parallelität mit der Fahrtrichtung FR ebenfalls mit FR bezeichnet) nach vorne gerichtete Längslenker 7 unterhalb des Radmittelpunktes 9 am Radträger 2 befestigt, während der ebenfalls zumindest teilweise in Fahrzeug-Längsrichtung FR nach hinten gerichtete Querlenker 8 oberhalb des Radmittelpunktes 9 am Radträger 2 befestigt ist. Mit der Bezugsziffer 10 ist dabei ein sog. Querlenker-Lager bezeichnet, über welches der Querlenker 8 an der Fahrzeug-Karosserie angebunden ist und bei welchem es sich um ein möglichst elastisches Gummilager handelt.

Wie weiter oben bereits ausführlich erläutert wurde, ist dieses Querlenker-Lager 10 sowohl in Zugrichtung als auch in Kompressionsrichtung (jeweils längs des Querlenkers 8 betrachtet) äußerst elastisch, und zwar insbesondere aus Gründen des Fahrkomforts. Somit ist der (hintere) Querlenker 8 ausgesprochen weich gelagert - so soll die Federsteifigkeit des Querlenker-Lagers 10 in der Größenordnung von 1000 N/mm liegen - und kann damit von Seiten der Fahrbahn eingebrachte Stöße weich abfangen. Auch der (vordere) Längslenker 7 ist über ein Gummilager 11 an der Fahrzeug-Karosserie befestigt, wobei dieses Längslenker-Gummilager 11 mit einer etwas höheren Steifigkeit als das genannte Querlenker-Lager 10 ausgeführt ist. Beispielsweise kann die Federsteifigkeit des Längslenker-Gummilagers 11 in der Größenordnung von 4000 N/mm oder darüber liegen und sollte insgesamt eine relativ hohe Dämpfung aufweisen, um die bereits erläuterte Aufziehbewegung des Rades beim Bremsen sowie dessen ebenfalls bereits genannte Stempelneigung zu minimieren.

Durch die beschriebene und gezeigte Anstellung des Längslenkers 7 und des Querlenkers 8 derart, daß sie mit der Fahrzeug-Längsachse FR einen Winkel von 50° oder weniger einschließen, ergibt sich bei einwirkenden Längskräften in Abhängigkeit von der Kraftrichtung der jeweils erwünschte Vorspur- oder Nachspureffekt. Weiter oben wurde dabei bereits ausführlich erläutert, unter Berücksichtigung welcher Abstandsverhältnisse der Längslenker 7 sowie der Querlenker 8 am Radträger 2 zu befestigen sind, damit sich die gewünschten Effekte bestmöglich einstellen. Demnach ist der in Vertikalrichtung V gemessene Abstand y zwischen dem Radträger-Anlenkpunkt 7a des vorderen Längslenkers 7 und dem Radmittelpunkt 9 größer als der in Vertikalrichtung V gemessene Abstand x zwischen dem Radträger-Anlenkpunkt 8a des hinteren Querlenkers 8 und dem Radmittelpunkt 9.

Die übrigen sich im wesentlichen in Querrichtung erstreckenden Lenker 4 bis 6 sind elastokinematisch derart abgestimmt, daß sich ein negativer Nachlaufwinkel, also eine in der Seitenansicht nach unten hinten geneigte Lenkdrehachse ergibt. Da die Kraftänderungen in diesen Lenkern 4, 5, 6 bei Längskräften vergleichsweise gering sind, können deren Gummilagersteifigkeiten ohne Rücksicht auf große Längsfederwege festgelegt werden. Damit läßt sich auch eine hohe Sturzsteifigkeit unter Seitenkraft erreichen.

Beim Ausführungsbeispiel nach den **Figuren 1a,- 1b** ist die Anordnung der einzelnen Lenker im Hinblick auf den an einem konkreten Fahrzeugmodell zur Verfügung stehenden Bauraum optimiert worden, so daß sich entsprechend der bisherigen Beschreibung die gewünschten Effekte einstellen. Beim Ausführungsbeispiel nach **Figur 2** ist der Radträger-Anlenkpunkt 7a des vorderen Längslenkers 7 noch näher zur Aufstandsfläche des Radreifens 1, d.h. zum Radaufstandspunkt A hingelegt, da sich hiermit ein noch günstigeres Kräfte- und Momentenverhältnis einstellt. Hier ist somit der in Vertikalrichtung V gemessene Abstand y zwischen dem Radträger-Anlenkpunkt 7a des vorderen Längslenkers 7 und dem Radmittelpunkt 9 größer als der in Vertikalrichtung V gemessene Abstand z zwischen dem Radträger-Anlenkpunkt 7a des vorderen Längslenkers 7 und dem Radaufstandspunkt A.

### Bezugszeichenliste:

- 1: Radreifen
- 2: Radträger
- 3: Feder-Dämpfer-Einheit
- 3a: Feder
- 3b: Dämpfer
- 4: Sturzlenker
- 5: Führungslenker
- 6: Spurstange
- 7: (vorderer) Längslenker
- 7a: Radträger-Anlenkpunkt von 7
- 8: (hinterer) Querlenker
- 8a: Radträger-Anlenkpunkt von 8
- 9: Radmittelpunkt
- 10: Querlenker-Lager
- 11: Längslenker-Gummilager

- A: Radaufstandspunkt
- FR: Fahrtrichtung / Fahrzeuglängsachse
- V: Vertikalrichtung
- x,y,z: Abstand

## Patentansprüche

1. Radaufhängung eines Kraftfahrzeug-Hinterrades mit fünf einerseits an einem Radträger (2) und andererseits direkt an der Fahrzeug-Karosserie befestigten Lenkern (4 - 8), wobei neben drei im wesentlichen in Fahrzeug-Querrichtung ausgerichteten Lenkern in Form einer Spurstange (6), eines Führungslenkers (5) sowie eines Sturzlenkers (4) noch ein zumindest teilweise in Fahrzeug-Längsrichtung (FR) nach vorne gerichteter und unterhalb des Radmittelpunktes (9) am Radträger (2) befestigter Längslenker (7) sowie ein oberhalb des Radmittelpunktes (9) am Radträger (2) befestigter und zumindest teilweise in Fahrzeug-Längsrichtung (FR) nach hinten gerichteter Querlenker (8) vorgesehen ist, der über ein elastisches Querlenker-Lager (10) befestigt ist, wobei dieser Längslenker (7) und dieser Querlenker (8) mit der Fahrzeug-Längsachse (FR) einen Winkel von 50° oder weniger einschließen,
**dadurch gekennzeichnet, dass** der in Vertikalrichtung (V) gemessene Abstand (y) zwischen dem Radträger-Anlenkpunkt (7a) des vorderen Längslenkers (7) und dem Radmittelpunkt (9) signifikant größer als der in Vertikalrichtung (V) gemessene Abstand (x) zwischen dem Radträger-Anlenkpunkt (8a) des hinteren Querlenkers (8) und dem Radmittelpunkt (9) ist, und dass das elastische Querlenker-Lager (10) auch in Zugrichtung elastisch ist und eine Federsteifigkeit in der Größenordnung von 1000 N/mm aufweist.

## Claims

1. A wheel suspension of a motor vehicle rear wheel with five links (4 to 8) fastened to a wheel carrier (2) on one side and directly to the vehicle body on the other side, wherein apart from three links, which are oriented substantially in the vehicle transverse direction and are in the form of a track rod (6), a guide link (5) and a camber link (4), also provided are a longitudinal link (7), which is at least partly directed to the front in the vehicle longitudinal direction (FR) and fastened below the wheel centre point (9) on the wheel carrier (2), as well as a transverse link (8) fastened above the wheel centre point (9) on the wheel carrier (2) and directed at least partly to the rear in the vehicle longitudinal direction (FR), which transverse link is fastened by means of an elastic transverse link bearing (10), this longitudinal link (7) and this transverse link (8) including an angle of 50 ° or less with the vehicle longitudinal axis (FR), **characterised in that** the spacing (y) measured in the vertical direction (V) between the wheel carrier articulation point (7a) of the front longitudinal link (7) and the wheel centre point (9) is significantly greater than the spacing (x) measured in the vertical direction (V) between the wheel carrier articulation point (8a) of the rear transverse link (8) and the wheel centre point (9) and **in that** the elastic transverse link bearing (10) is also elastic in the tensioning direction and has a spring rigidity of the order of 1000 N/mm.

## Revendications

1. Suspension de roue pour une roue arrière d'un véhicule comportant cinq bras (4, 8) fixés d'une part à un support de roue (2) et d'autre part à leur extrémité à la carrosserie du véhicule, comportant outre trois bras essentiellement orientés dans la direction transversale du véhicule et réalisés sous la forme d'une barre d'accouplement (6) d'un bras de guidage (5) ainsi que d'un bras de décharge (4), également un bras longitudinal (7) dirigé au moins partiellement vers l'avant dans la direction longitudinale du véhicule (FR) et fixé sur le support de roue (2) au-dessous du point central (9) de la roue ainsi qu'un bras transversal (8) dirigé au moins partiellement vers l'arrière dans la direction longitudinale du véhicule (FR), fixé sur le support de roue (2) au-dessus du point central (9) de la roue, et fixé par l'intermédiaire d'un palier de bras transversal élastique (10), le bras longitudinal (7) et le bras transversal (8) délimitant, avec la direction longitudinale du véhicule (FR), un angle de 50° ou moins,
**caractérisée en ce que**
la distance (y) mesurée en direction verticale (V) entre le point d'articulation (7a) sur le support de roue du bras longitudinal avant (7) et le point central (9) de la roue est significativement supérieure à la distance (x) mesurée en direction verticale (V) entre le point d'articulation (8a) sur le support de roue du bras transversal arrière (8) et le point central (9) de la roue, et le palier de bras transversal élastique (10) est également élastique dans la direction de traction et a une raideur élastique de l'ordre de 1000 N/mm.
